# EUROPÄISCHE PATENTANMELDUNG

(11) **EP 2 322 762 A1**
(43) Veröffentlichungstag der Anmeldung: **18.05.2011**
(21) Anmeldenummer: 09014186.2
(22) Anmeldetag: 12.11.2009
(51) Int. Cl.: F01D 5/28, F01D 5/14

(54) **Modulares Turbinenbauteil und Verfahren zu dessen Herstellung**

(71) Anmelder: SIEMENS AKTIENGESELLSCHAFT, 80333 München (DE)
(72) Erfinder: Reinkensmeier, Ingo, 58730 Fröndenberg (DE)

(57) **Zusammenfassung**

Es wird ein modulares Turbinenbauteil (1) zur Verwendung im Heißgaspfad einer Turbine zur Verfügung gestellt. Das modulare Turbinenbauteil (1) umfasst wenigstens ein erstes Beuteilelement (9) aus einem Material mit einem ersten Wärmeausdehnungskoeffizienten und ein zweites Bauteilelement (3) aus einem Material mit einem zweiten, vom ersten verschiedene Wärmeausdehnungskoeffizienten, wobei die Beuteilelemente (3, 9) stoffschlüssig (13, 14, 15) miteinander verbunden sind. Die stoffschlüssige Verbindung (13, 14, 15) zwischen dem ersten Bauteilelement (9) und dem zweiten Bauteilelement (3) umfasst eine spannungsreduzierende Pufferschicht (11, 17).

## Beschreibung

Die vorliegende Erfindung betrifft ein modulares Turbinenbauteil zur Verwendung im Heißgaspfad einer Turbine sowie ein Verfahren zur Herstellung eines solchen Turbinenbauteils. Ein Turbinenbauteil zur Verwendung im Heißgaspfad einer Turbine kann hierbei insbesondere eine Turbinenschaufel sein.

In den heutigen stationären Gasturbinen zur Energieerzeugung ist man bestrebt, immer höhere Wirkungsgrade und zunehmende Effizienz unter Zugrundelegung immer kostengünstigerer und resourcenschonender Fertigungsverfahren herzustellen. Die höheren Wirkungsgrade werden in der Regel durch höhere Eintrittstemperaturen im Heißgasbereich erzielt, wodurch die Anforderungen an die im Heißgaspfad befindlichen Turbinenkomponenten steigen. Um diesen Aufforderungen zu genügen werden Turbinenbauteile im Heißgaspfad, insbesondere Turbinenschaufeln, aus thermisch hoch resistenten Materialien hergestellt. Thermisch hoch resistente Materialien sind beispielsweise einkristalline Superlegierungen, die bei steigenden Eintritttemperaturen zunehmend Verwendung finden. Nachteilig an solchen einkristallinen Superlegierungen ist jedoch das ihre Herstellung sehr kostenintensiv ist. Es gibt daher schon seit längerem die Idee Turbinenschaufeln modular aufzubauen.

Modulare Turbinenschaufeln sind beispielsweise in EP 1 489 264 A1 und in US 2006/0228211 A1 beschrieben. Diese Turbinenschaufeln sind aus getrennten Segmenten zusammengesetzt, wobei ein Segment für die Anströmkante, ein Segment für die Abströmkante und ein Segment für den mittleren Bereich des Schaufelblattes vorhanden sind. Die Segmente können durch Pressanpassung, Löten, Schweißen, Kleben, Stiftverbindungen oder vulkanisierten Verbindungen miteinander verbunden werden. Als Materialien für die einzelnen Segmente sind in EP 1 489 264 A1 Keramikmaterialien, Metalle, Metalllegierungen und Kunststoffmaterialien genannt. In US 2006/0228211 A1 ist beschrieben, dass Zwischenräume zwischen den Segmenten vorhanden sind, wenn diese sich in ihren thermischen Ausdehnungskoeffizienten wesentlich unterscheiden. Entstehende Lücken können durch Löten oder Schweißen geschlossen werden. Alternativ können die Lücken mit nachgiebigen Einsätzen oder anderen Dichtungen gefüllt werden, um den Eintritt von Heißgas in die Öffnungen zu verhindern.

Obwohl in den beiden genannten Dokumenten Löten und Schweißen als Fügetechniken genannt sind, existiert bis heute keine befriedigende Lösung zum stoffschlüssigen Fügen von Segmenten in Turbinenbauteilen zur Verwendung im Heißgaspfad einer Turbine, die das Fügen von Segmenten mit stark unterschiedlichen Ausdehnungskoeffizienten ermöglichen.

Es ist daher Aufgabe der vorliegenden Erfindung, ein Turbinenbauteil zur Verwendung im Heißgaspfad einer Turbine zur Verfügung zu stellen, das aus Segmenten aufgebaut ist, die stoffschlüssig gefügt sind. Eine weitere Aufgabe der vorliegenden Erfindung ist es, ein vorteilhaftes Verfahren zum Herstellen eines modularen Turbinenbauteils zur Verwendung im Heißgaspfad einer Turbine zur Verfügung zu stellen.

Die erste Aufgabe wird durch ein Turbinenbauteil zur Verwendung im Heißgaspfad einer Turbine nach Anspruch 1 gelöst, die zweite Aufgabe durch ein Verfahren zum Herstellen eines solchen Turbinenbauteils nach Anspruch 10. Die abhängigen Ansprüche enthalten vorteilhafte Ausgestaltungen der Erfindung.

Ein erfindungsgemäßes modulares Turbinenbauteil zur Verwendung im Heißgaspfad einer Turbine umfasst wenigstens ein erstes Bauelement aus einem Material mit einem ersten Wärmeausdehnungskoeffizienten und ein zweites Bauteilelement aus einem Material mit einem zweiten, vom ersten verschiedenen Wärmeausdehnungskoeffizienten. Die Bauteilelemente sind stoffschlüssig miteinander verbunden, wobei die stoffschlüssige Verbindung zwischen dem ersten Bauteilelement und dem zweiten Bauteilelement eine spannungsreduzierende Pufferschicht umfasst.

Die Verwendung einer spannungsreduzierenden Pufferschicht ermöglicht das stoffschlüssige Fügen auch von Bauteilelementen mit stark unterschiedlichen Wärmeausdehnungskoeffizienten. Die durch die Beaufschlagung mit Heißgas aufgrund der unterschiedlichen thermischen Dehnungen entstehenden Spannungen können durch die Pufferschicht abgefangen werden, so dass spannungsinduzierte Risse in der stoffschlüssige Fügung vermieden werden können.

Die Pufferschicht kann insbesondere eine metallische Pufferschicht sein, die beispielsweise ein Metallgewebe und/oder einen Metallschaum umfasst. Die Strukturen solcher Pufferschichten ermöglichen eine Dehnung der Pufferschicht in dem Bereich, der an das Material mit dem höheren Wärmeausdehnungskoeffizienten angrenzt.

Die stoffschlüssige Verbindung zwischen dem ersten Bauteilelement und dem zweiten Bauteilelement kann insbesondere eine Lötverbindung mit einem Aktivlot umfassen. Unter Aktivloten sind metallische Lote mit einer Legierungszusammensetzung zu verstehen, die es ermöglicht, nichtmetallische, anorganische Werkstoffe zu benetzen. Hierzu enthalten Aktivlote typischerweise Komponenten, wie beispielsweise Titan, Zirkonium oder Hafnium, die bspw. mit Keramikmaterialien reagieren können. Dadurch werden Aktivlote in die Lage versetzt, keramische Materialien zu benetzen, so dass ein direktes Löten von Keramik an ein Metall ohne zusätzliche Metallisierung der Keramik möglich ist. Eine solche Verbindung ermöglicht es insbesondere, als Material mit dem ersten Wärmeausdehnungskoeffizienten ein Keramikmaterial und als Material mit dem zweiten Wärmeausdehnungsausdehnungskoeffizienten ein metallisches Material zu verwenden. Mittels eines keramischen Materials können beispielsweise Anström- oder Abströmkanten von Turbinenschaufeln besonders hitzebeständig ausgebildet werden, d.h., die besonders kritischen Bereiche wie Anströmoder Abströmkanten können aus Keramiken hergestellt sein, wohingegen der Rest der Schaufel konventionell gestaltet ist. Dadurch kann die Lebensdauer des Bauteils verlängert werden oder bei gleich bleibender Lebensdauer die thermische Belastung.

Das Material mit dem zweiten Wärmeausdehnungskoeffizienten kann insbesondere eine Legierung mit einer metallischen Basiskomponente sein. Vorzugsweise ist dann die metallische Pufferschicht aus derselben Legierung wie die metallische Komponente oder aus der Basiskomponente dieser Legierung hergestellt. Auf diese Weise kann eine besonders zuverlässige Verbindung zwischen der Basiskomponente bzw. der Legierung und der Pufferschicht erzeugt werden. Als Legierung mit einer metallischen Basiskomponente kommen insbesondere Superlegierungen auf Nickel-, Kobalt- oder Eisenbasis in Frage.

Besonders vorteilhaft ist das erfindungsgemäße modulare Turbinenbauteil als Turbinenschaufel, also als Leit- oder Laufschaufel einer Turbine, insbesondere einer Gasturbine, ausgestaltet. Solche Schaufeln können bei Beaufschlagung mit Heißgas an verschiedenen Bereichen stark unterschiedlich thermisch belastet sein. Insbesondere sind Anströmkanten einer hohen thermischen Belastung ausgesetzt. Aber auch Abströmkanten oder Blattspitzen können hohen thermischen Belastungen ausgesetzt sein. Es ist daher sinnvoll insbesondere solche Bereiche mit einem thermisch sehr hoch belastbaren Material herzustellen, beispielsweise Keramik. Die übrigen Bereiche der Turbinenschaufel können dann aus polykristallinen Superlegierungsmaterialien, einkristallinen Superlegierungsmaterialien oder direktional erstarrten Superlegierungsmaterialien hergestellt sein. Im Falle von polykristallinem Superlegierungsmaterialien weisen die Materialien Kristallite (auch Körner genannt) auf. Im Falle einer direktional erstarrten Superlegierung besitzen die Körner eine Vorzugsrichtung, so dass beispielsweise eine stängelkristalline Struktur entsteht, wobei die Stängel parallel zueinander ausgerichtet sind.

Gemäß einem weiteren Aspekt der Erfindung wird ein Verfahren zum Herstellen oder Wiederaufbereiten eines modularen Turbinenbauteils zur Verwendung im Heißgaspfad einer Turbine zur Verfügung gestellt. Die Herstellung erfolgt aus wenigstens einem ersten Bauteilelement aus einem Material mit einem ersten Wärmeausdehnungskoeffizienten und einem zweiten Bauteilelement aus einem Material mit einem zweiten, vom ersten verschiedenen Wärmeausdehnungskoeffizienten. Die Bauteilelemente werden stoffschlüssig gefügt, wobei das Fügen unter Verwendung einer spannungsreduzierenden Pufferschicht erfolgt.

Das erfindungsgemäße Verfahren ermöglicht das Herstellen eines erfindungemäßen modularen Turbinenbauteils, etwa einer modularen Turbinenschaufel, insbesondere einer Gasturbinenleit- oder Laufschaufel, und damit das Realisieren der mit Bezug auf das erfindungsgemäße Turbinenbauteil beschriebenen Vorteile. Durch die Verwendung der spannungsreduzierenden Pufferschicht wird insbesondere eine Fügung zwischen Bauteilelementen aus Materialien mit stark unterschiedlichen thermischen Ausdehnungskoeffizienten überhaupt erst ermöglicht. Als Pufferschicht kann hierbei insbesondere eine metallische Pufferschicht Verwendung finden, beispielsweise ein Metallgewebe oder ein Metallschaum.

In einer vorteilhaften Ausgestaltung des erfindungsgemäßen Verfahrens ist das erste Material ein Keramikmaterial und das zweite Material ein metallisches Material. Das Fügen erfolgt in dieser Ausgestaltung durch Verlöten des ersten Bauteilelements mit dem zweiten Bauteilelement unter Verwendung eines Aktivlots. Die Verwendung eines solchen Lotes ermöglicht insbesondere das Verlöten eines Keramikmaterials mit einem metallischen Material.

Als Material mit dem zweiten Wärmeausdehnungskoeffizienten kann insbesondere eine Legierung mit einer metallischen Basiskomponente Verwendung finden. Als metallische Pufferschicht wird dann eine metallische Pufferschicht aus derselben Legierung wie die metallische Komponente oder aus der Basiskomponente dieser Legierung verwendet. Auf diese Weise kann eine gute Verbindung mit der Superlegierung der metallischen Komponente sicher gestellt werden.

Das erfindungsgemäße Verfahren eignet sich insbesondere zum Herstellen einer Turbinenschaufel wie etwa einer Leit- oder Laufschaufel einer Gasturbine. Bauteilelemente aus dem material mit dem ersten Wärmeausdehnungskoeffizienten können hierbei Blattspitzen und/oder Anströmkanten und/oder Abströmkanten sein. Als Bauteilelemente aus dem Material mit dem zweiten Wärmeausdehnungskoeffizienten kommen beispielsweise das Schaufelblatt und/oder der Schaufelfuß und/oder die innere Schaufelplattform und/oder die äußere Schaufelplattform in Frage.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt beispielhaft eine Gasturbine in einem Längsteilschnitt.
- Figur 2: zeigt eine Turbinenschaufel in perspektivischer Darstellung.
- Figur 3: zeigt eine beispielhafte Gasturbinenbrennkammer.
- Figur 4: zeigt eine erfindungsgemäße Gasturbinenschaufel in einer auseinander gezogenen Darstellung.
- Figur 5: zeigt die Turbinenschaufel in einem Schnitt parallel zur Strömungsrichtung.
- Figur 6: zeigt ein Ausführungsbeispiel für eine spannungsreduzierende Pufferschicht zur Verwendung in der erfindungsgemäßen Turbinenschaufel.

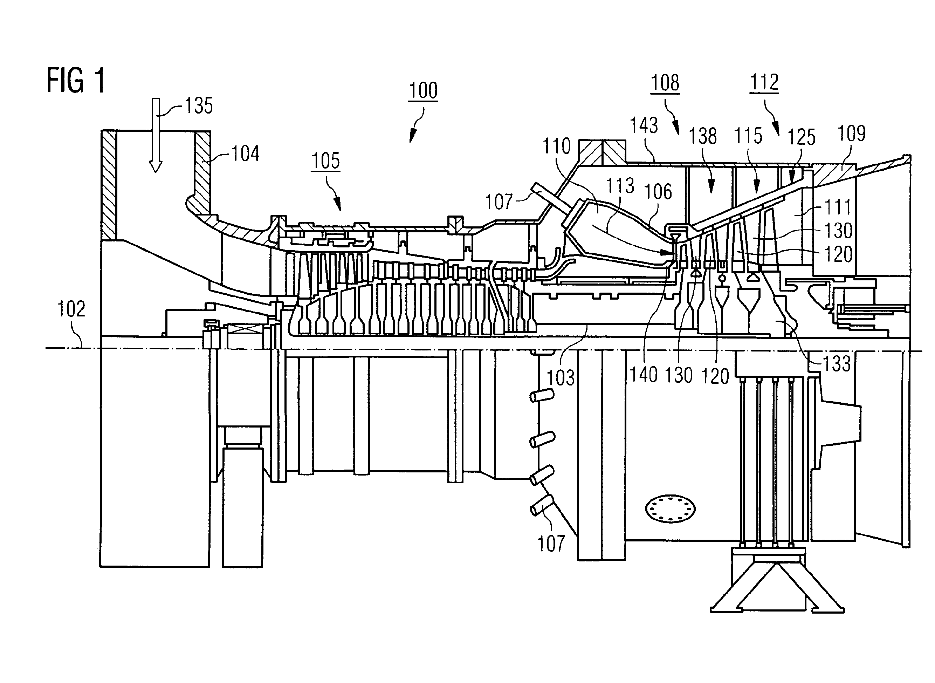

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

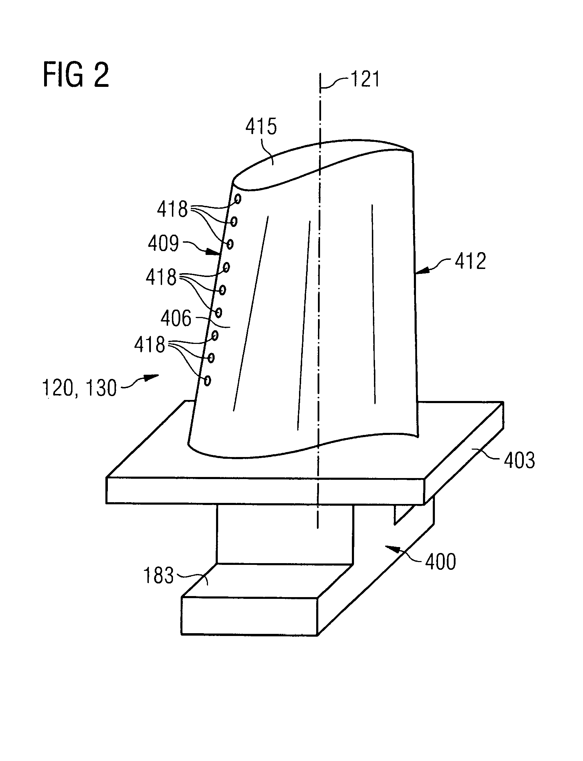

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt):

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

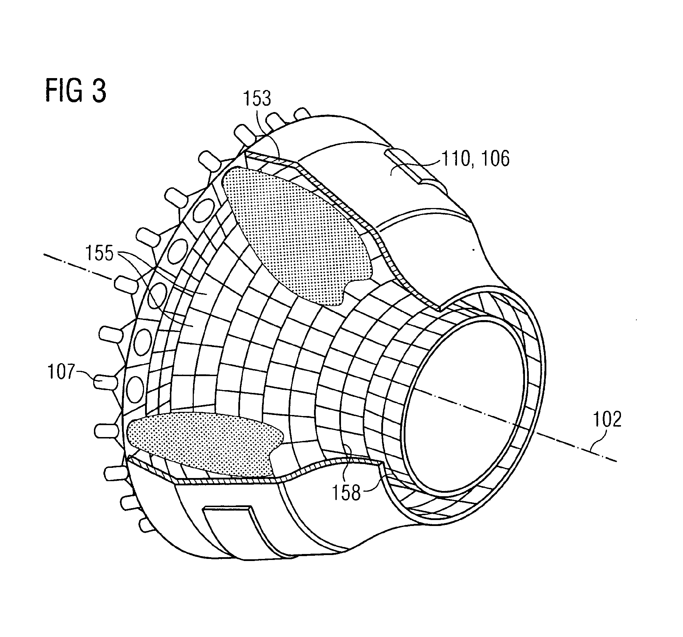

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrA1X kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

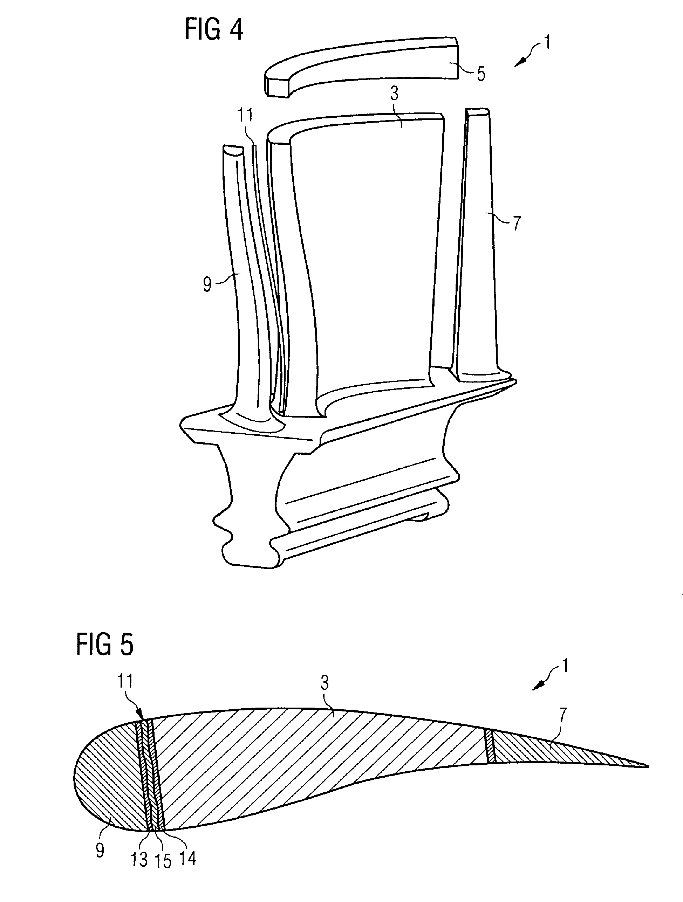

Ein erfindungsgemäßes Turbinenbauteil wird nachfolgend mit Bezug auf die Figuren 4 und 5 am Beispiel einer Turbinenschaufel beschrieben. Während Figur 4 die Turbinenschaufel in einer auseinander gezogenen perspektivischen Darstellung zeigt, zeigt Figur 5 die Turbinenschaufel in einer Schnittansicht, wobei der Schnitt parallel zur Hauptströmungsrichtung des Arbeitsmediums um die Turbinenschaufel herum erfolgt. Obwohl die Figuren 4 und 5 zur beispielhaften Erläuterung der Erfindung eine Laufschaufel zeigen, kann die Erfindung ebenso in Form einer Leitschaufel realisiert sein. Außerdem ist es möglich, andere im Heißgaspfad einer Turbine zu verwendende Turbinenbauteile in entsprechender Weise modular auszugestalten.

Die in Figur 4 dargestellte Turbinenschaufel weist vier Bauteilelemente auf, die im Folgenden Schaufelelemente genannt sind, wobei ein erstes Schaufelelement 3 das Schaufelblatt und den Schaufelfuß umfasst. Dieses Schaufelelement 3 stellt das zentrale Schaufelelement dar, an dem die übrigen Schaufelelemente befestigt werden. Es ist im vorliegenden Ausführungsbeispiel aus einer einkristallinen Superlegierung auf Nickelbasis hergestellt, aber auch andere Superlegierungen, beispielsweise solche auf Kobaltbasis oder Eisenbasis kommen grundsätzlich zum Herstellen des zentralen Schaufelbauteils in Frage. In Abweichung zum dargestellten Ausführungsbeispiel können Schaufelblatt und Schaufelfuß aber auch als zwei getrennte Schaufelelemente ausgeführt sein. Falls beide Elemente jedoch aus demselben Material bestehen, ist es im Sinne der Ökonomie des Herstellungsprozesses vorteilhaft, Schaufelblatt und Schaufelfuß als einziges, gemeinsames Schaufelbauteil auszuführen. Weiterhin kann das zentrale Schaufelbauteil 3 auch statt aus einer einkristallinen Superlegierung aus einer direktional verfestigten Superlegierung hergestellt sein, also bspw. aus einer Superlegierung mit einer stängelkristallinen Struktur oder einer anderen Kornstruktur mit einer bevorzugten Kornausrichtung. Wenn Schaufelblatt und Schaufelfuß als getrennte Schaufelelemente vorhanden sind, besteht selbstverständlich auch die Möglichkeit, das eine, beispielsweise das Schaufelblatt, einkristallin und das andere, beispielsweise den Schaufelfuß, direktional verfestigt herzustellen.

Ein zweites Schaufelbauteil bildet im vorliegenden Ausführungsbeispiel die Blattspitze 5. Diese ist im Unterschied zum Schaufelblatt und zum Schaufelfuß nicht aus direktional verfestigtem oder einkristallinem Superlegierungsmaterial, sondern aus polykristallinem Superlegierungsmaterial hergestellt. In seiner chemischen Zusammensetzung kann das Superlegierungsmaterial der Blattspitze insbesondere dem Superlegierungsmaterial des Schaufelblattes bzw. des Schaufelfußes entsprechen. Aber auch Abweichungen im Material sind grundsätzlich möglich. Im vorliegenden Beispiel ist das den Schaufelfuß und das Schaufelblatt umfassende Schaufelbauteil 3, wie bereits erwähnt, aus einer einkristallinen Superlegierung auf Nickelbasis hergestellt. Die Blattspitze 5 ist dagegen aus einer polykristallinen Superlegierung auf Nickelbasis hergestellt. Sie wird mittels eines geeigneten Schweiß- oder Lötverfahrens an das entgegengesetzt zum Schaufelfuß befindliche Ende des Schaufelblattes angelötet, also stoffschlüssig mit diesem verbunden.

Ein drittes Schaufelelement wird von der Abströmkante 7 der Turbinenschaufel 1 gebildet. Diese ist wie die Blattspitze 5 als separates Teil aus polykristallinem Silizium hergestellt und mittels einer Schweiß- oder Lötverbindung mit dem abströmseitigen Ende des Schaufelblattes im ersten Schaufelbauteil 3 verbunden. Wie bei der Blattspitze 5 kann die Abströmkante 7 aus demselben Superlegierungsmaterial wie das Schaufelblatt hergestellt sein oder aus einem anderen Superlegierungsmaterial.

Die Anströmkante 9 bildet ein viertes Schaufelelement der erfindungsgemäßen Turbinenschaufel 1. Im Unterschied zu der Blattspitze 5 und der Abströmkante 7 ist die Anströmkante 9 nicht aus einem Superlegierungsmaterial hergestellt, sondern aus einem Keramikmaterial, da die Anströmkante 9 beim Betrieb der Gasturbine den extremsten thermischen Belastungen ausgesetzt ist und ein Keramikmaterial sich für diese Belastungen in besonderer Weise eignet. Insbesondere kann die Anströmkante 9 aus einem keramischen Kompositmaterial hergestellt sein, in dem Keramikfasern in eine Matrix aus keramischem Harz eingebettet sind. Derartige Keramikmaterialien, die auch unter der Abkürzung CMC (ceramic matrix composite) bekannt sind, können durch die Verwendung geeigneter Fasern und geeigneter Harze in besonderem Maße an die Verwendung in thermisch hoch belasteten Abschnitten von Turbinenschaufeln angepasst werden.

Die keramische Anströmkante 9 weißt im Vergleich zum Superlegierungsmaterial einen deutlich geringeren thermischen Ausdehnungskoeffizienten auf. Um im späteren Betrieb der Gasturbine Spannungsrisse an der Nahtstelle zwischen der keramischen Anströmkante 9 und dem aus einer Superlegierung hergestellten Schaufelblattabschnitt des zentralen Schaufelteils 3 zu vermeiden, wird die Anströmkante 9 mit dem ersten Schaufelelement 3 nicht unmittelbar formschlüssig verbunden, sondern unter Zwischenschaltung einer spannungsreduzierenden Pufferschicht 11, die zwischen der keramischen Anströmkante 9 und dem ersten Schaufelelement 3 angeordnet wird. Im vorliegenden Ausführungsbeispiel findet eine Schicht aus Metallschaum als Pufferschicht Verwendung. Hierbei kann der Metallschaum insbesondere aus dem Superlegierungsmaterial hergestellt sein, aus dem auch das erste Schaufelelement 3 hergestellt ist. Es besteht aber auch die Möglichkeit, den Metallschaum aus dem Basismaterial selbst herzustellen. Wenn etwa, wie im vorliegenden Ausführungsbeispiel, eine Superlegierung auf Nickelbasis Verwendung findet, kann der Metallschaum aus Nickel hergestellt sein.

Die keramische Anströmkante 9 wird mit der Pufferschicht 11 aus Metallschaum unter Verwendung eines Aktivlots 13 verlötet, um eine stoffschlüssige Verbindung herzustellen. Das Aktivlot dringt dabei ein wenig in die Poren des Metallschaums 11 ein, wodurch diese zuverlässig mit dem Keramikmaterial verlötet wird.

Der Schaufelblattabschnitt des ersten Schaufelelements 3 wird mittels einer konventionellen Löt- oder Schweißverbindung 14 ebenfalls mit der Pufferschicht 11 stoffschlüssig verbunden. Auch hier dringt Schweiß- bzw. Lötmaterial in die Poren des Metallschaums 11 ein und sorgt so für eine stabile formschlüssige Verbindung. Die Prozessführung der Löt- bzw. Schweißprozesse ist dabei so gewählt, dass die Eindringtiefe des Lots bzw. des Schweißmaterials in den Metallschaum nicht so groß wird, dass sich das von beiden Seiten eindringende Material miteinander verbindet. Auf diese weise verbleibt ein Lot- bzw. Schweißmaterial freier Bereich 15 in dem die spannungsreduzierende Pufferschicht bildenden Metallschaum, der genügend Elastizität zur Verfügung stellt, um Spannungsrisse im Bereich der Fügung zu vermeiden.

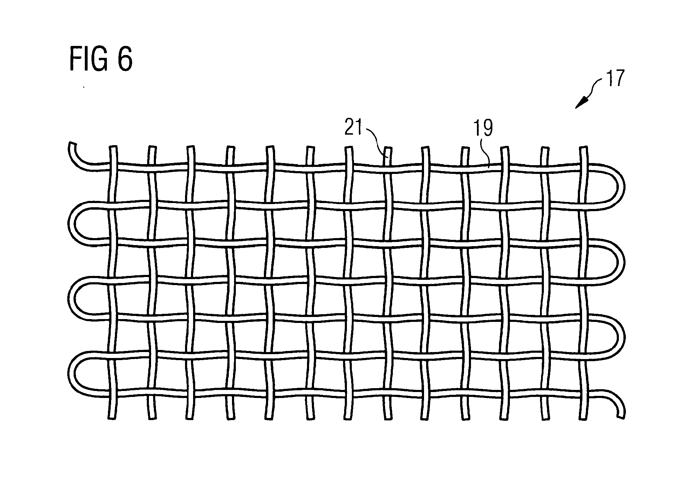

Statt des im vorliegenden Ausführungsbeispiel als Pufferschicht verwendeten Metallschaums können auch andere spannungsreduzierende Strukturen Verwendung finden, bspw. ein Drahtgewebe, wie es in Figur 6 dargestellt ist. Die Figur zeigt eine Lage eines als Pufferschicht geeigneten Drahtgewebes 17. Es sind sowohl die Schussfäden 19 als auch die Kettfäden 21 dargestellt. Eine Pufferschicht kann insbesondere mehrere Lagen aus Drahtgewebe 17 umfassen, die punktuell miteinander verbunden sind, beispielsweise verschweißt oder verlötet, oder durch Drahtfäden aneinander gehalten werden. Die Anzahl der Drahtgeflechtlagen wird so gewählt, dass die angrenzenden Schaufelelemente durch eine zuverlässige Benetzung des Drahtgewebes mit diesem sicher verbunden werden können und gleichzeitig im Inneren des Drahtgewebes ein lot- bzw. schweißmittelfreier Bereich verbleibt, der eine hinreichende Elastizität zur Verfügung stellt, so dass Dehnungsrisse aufgrund unterschiedlichen thermischen Dehnverhaltens der gefügten Schaufelelemente vermieden werden können.

Im vorliegenden Ausführungsbeispiel war lediglich die Anströmkante 9 aus einem Keramikmaterial hergestellt. Es können aber auch andere Schaufelelemente, beispielsweise die Blattspitze oder die Abströmkante aus Keramikmaterial statt aus einem polykristallinen Basislegierungsmaterial hergestellt sein. In diesem Fall würde das Fügen ebenfalls unter Zuhilfenahme einer spannungsreduzierenden Pufferschicht, wie sie mit Bezug auf das Verbinden der Anströmkante 9 mit dem Schaufelblatt beschrieben wurde, erfolgen.

Der anhand einer Turbinenschaufel als Ausführungsbeispiel beschriebene Modulansatz ermöglicht das Herstellen von Turbinenschaufeln, in denen bestimmte Bereiche der Turbinenschaufel gezielt aus geeigneten Materialien hergestellt werden können. Außerdem ermöglicht er eine vorteilhafte Wiederaufarbeitungsstrategie (refurbishment strategy) zum Reparieren von teuren Turbinenbauteilen, in der hoch belastete Bereiche eines Turbinenbauteils ausgetauscht werden können. Dadurch lässt sich die Lebensdauer des teuren einkristallinen oder direktional verfestigten Grundkörpers, der im vorliegenden Ausführungsbeispiel durch das den Schaufelfuß und das Schaufelblatt umfassende zentrale Schaufelelement gebildet ist, bei gleich bleibender Leistungsfähigkeit erreichen. Alternativ besteht die Möglichkeit bei unveränderter Lebensdauer das Turbinenbauteil bei höherer Temperatur einzusetzen, da die schnell verschleißenden Abschnitte ausgetauscht werden können.

## Patentansprüche

1. Modulares Turbinenbauteil (1) zur Verwendung im Heißgaspfad einer Turbine, das wenigstens ein erstes Beuteilelement (9) aus einem Material mit einem ersten Wärmeausdehnungskoeffizienten und ein zweites Bauteilelement (3) aus einem Material mit einem zweiten, vom ersten verschiedene Wärmeausdehnungskoeffizienten umfasst, wobei die Beuteilelemente (3, 9) stoffschlüssig (13, 14, 15) miteinander verbunden sind,
**dadurch gekennzeichnet, dass**
die stoffschlüssige Verbindung (13, 14, 15) zwischen dem ersten Bauteilelement (9) und dem zweiten Bauteilelement (3) eine spannungsreduzierende Pufferschicht (11, 17) umfasst.

2. Modulares Turbinenbauteil (1) nach Anspruch 1,
**dadurch gekennzeichnet, dass**
Pufferschicht eine metallische Pufferschicht (11, 17) ist.

3. Modulares Turbinenbauteil (1) nach Anspruch 2,
**dadurch gekennzeichnet, dass**
die metallische Pufferschicht ein Metallgewebe (17) umfasst.

4. Modulares Turbinenbauteil (1) nach Anspruch 2 oder Anspruch 3,
**dadurch gekennzeichnet, dass**
die metallische Pufferschicht einen Metallschaum (11) umfasst.

5. Modulares Turbinenbauteil (1) nach einem der Ansprüche 1 bis 4,
**dadurch gekennzeichnet, dass**
die stoffschlüssige Verbindung (13, 14, 15) zwischen dem ersten Bauteilelement (9) und dem zweiten Bauteilelement (3) eine Lötverbindung (13) mit einem Aktivlot umfasst.

6. Modulares Turbinenbauteil (1) nach Anspruch 5,
**dadurch gekennzeichnet, dass**
das Material mit dem ersten Wärmeausdehnungskoeffizienten ein Keramikmaterial, das Material mit dem zweiten Wärmeausdehnungskoeffizienten ein metallisches Material ist.

7. Modulares Turbinenbauteil (1) nach Anspruch 6,
**dadurch gekennzeichnet, dass**
das Keramikmaterial ein keramisches Kompositmaterial ist.

8. Modulares Turbinenbauteil (1) nach einem der Ansprüche 1 bis 7,
**dadurch gekennzeichnet, dass**
das Material mit dem zweiten Wärmeausdehnungskoeffizienten eine Legierung mit einer metallischen Basiskomponente ist und die metallische Pufferschicht (11, 17) aus derselben Legierung wie die metallische Komponente oder aus der Basiskomponente dieser Legierung besteht.

9. Modulares Turbinenbauteil (1) nach einem der Ansprüche 1 bis 8,
**dadurch gekennzeichnet, dass**
es eine Turbinenschaufel ist.

10. Verfahren zum Herstellen oder Wiederaufbereiten eines modularen Turbinenbauteils (1) zur Verwendung im Heißgaspfad einer Turbine aus wenigstens einem ersten Beuteilelement (9) aus einem Material mit einem ersten Wärmeausdehnungskoeffizienten und einem zweiten Beuteilelement (3) aus einem Material mit einem zweiten, vom ersten verschiedene Wärmeausdehnungskoeffizienten, wobei die Beuteilelemente (3, 9) stoffschlüssig (13, 14, 15) gefügt werden,
**dadurch gekennzeichnet, dass**
das Fügen unter Verwendung einer spannungsreduzierenden Pufferschicht (11, 17) erfolgt.

11. Verfahren nach Anspruch 10,
**dadurch gekennzeichnet, dass**
als Pufferschicht eine metallische Pufferschicht (11, 17) Verwendung findet.

12. Verfahren nach Anspruch 10,
**dadurch gekennzeichnet, dass**
das erste Material ein Keramikmaterial und das zweite Material ein metallisches Material ist und dass das Fügen durch Verlöten des ersten Bauteilelements (9) mit dem zweiten Bauteilelement (3) unter Verwendung eines Aktivlots erfolgt.

13. Verfahren nach Anspruch 12,
**dadurch gekennzeichnet, dass**
als Keramikmaterial ein keramisches Kompositmaterial zur Anwendung kommt.

14. Verfahren nach einem der Ansprüche 10 bis 13,
**dadurch gekennzeichnet, dass**
das als Material mit dem zweiten Wärmeausdehnungskoeffizienten eine Legierung mit einer metallischen Basiskomponente Verwendung findet und eine metallische Pufferschicht aus derselben Legierung wie die metallische Komponente oder aus der Basiskomponente dieser Legierung Verwendung findet.

15. Verfahren nach einem der Anspruch 10 bis 14,
**dadurch gekennzeichnet, dass**
es zum Herstellen einer Turbinenschaufel (1) Verwendung findet.
